Europäisches Patentamt

European Patent Office

Office européen des brevets

(19)

(11) Veröffentlichungsnummer : **0 083 350**
**B1**

(12) **EUROPÄISCHE PATENTSCHRIFT**

(45) Veröffentlichungstag der Patentschrift :
**18.09.85**

(51) Int. Cl.⁴ : **H 02 G   3/08**

(21) Anmeldenummer : **82902058.5**

(22) Anmeldetag : **22.06.82**

(86) Internationale Anmeldenummer :
**PCT/DE 82/00130**

(87) Internationale Veröffentlichungsnummer :
**WO/8300263 (20.01.83 Gazette 83/02)**

(54) **EINFÜHRUNG EINER ANSCHLUSSLEITUNG IN EIN ELEKTRISCHES GERÄT.**

(30) Priorität : **09.07.81 DE 3127124**

(43) Veröffentlichungstag der Anmeldung :
**13.07.83 Patentblatt 83/28**

(45) Bekanntmachung des Hinweises auf die Patenterteilung : **18.09.85 Patentblatt 85/38**

(84) Benannte Vertragsstaaten :
**DE FR GB**

(56) Entgegenhaltungen :
**DE-A- 2 927 558**
**DE-B- 1 100 198**
**DE-C-   644 887**
**DE-C-   961 358**
**FR-A- 2 444 549**
**GB-A-   946 788**

(73) Patentinhaber : **ROBERT BOSCH GMBH**
**Postfach 50**
**D-7000 Stuttgart 1 (DE)**

(72) Erfinder : **FRENZNICK, Anton**
**Elbestrasse 4f**
**D-8500 Nürnberg (DE)**
Erfinder : **JUST, Bernhard**
**Rotenbergstrasse 20**
**D-7053 Kernen (DE)**
Erfinder : **KRAUSS, Eugen**
**Oberer Rosberg 31**
**D-7050 Waiblingen (DE)**
Erfinder : **PFANDER, Werner**
**Eschenweg 10**
**D-7012 Fellbach (DE)**
Erfinder : **TRÄNKLE, Ewald**
**Ludwigstrasse 46**
**D-7150 Backnang (DE)**

**Beschreibung**

Stand der Technik

Die Erfindung geht von einer Einführung einer Anschlußleitung für ein elektrisches Gerät nach der Gattung des Hauptanspruchs aus.

Es ist aus der DE-A-2 927 558 bei einer Einführung einer Anschlußleitung bekannt, auf jedem eine Ader umgebenden Endabschnitt der Kunststofftülle einen Schrumpfschlauch anzuordnen, der .sich bis auf das abisolierte Leiterende erstreckt. Dabei überdeckt der Schrumpfschlauch den Übergang vom abisolierten Leiterende zu dem mit einer Isolierhülle umgebenen, eine Ader der Leitung bildenden Leiter. Die Kunststofftülle ihrerseits ist um die Aderenden und den Endabschnitt eines die Adern umhüllenden Kunststoffmantels und mit diesem verschweißend gespritzt. Da insbesondere an exponierten Stellen im Kraftfahrzeug die Leitungen durch die Litzenleiter atmen, kann bei derartigen Einführungen auf diese Weise mit der Luft auch Feuchtigkeit von der Leitungsseite her in das Innere des elektrischen Geräts gelangen, indem sich die Feuchtigkeit zwischen und entlang den einzelnen Drähten ausbreitet. Durch Verzinnen der Litzenleiter kann dieser Nachteil zwar beseitigt werden, jedoch ergibt sich eine Abdichtung zum Schrumpfschlauch nur dann, wenn die Verzinnung eine gute Rundheit des Leiters ergibt, so daß der Schrumpfschlauch allseitig anliegt. Das Ausbilden der bekannten Einführung des Leitungsanschlusses durch das Rundverzinnen der Litzen und die Schrumpfschlauchabdichtung ist jedoch verhältnismäßig arbeits- und kostenintensiv.

Vorteile der Erfindung

Die erfindungsgemäße Einführung einer Anschlußleitung mit den Merkmalen im kennzeichnenden Teil des Hauptanspruchs hat demgegenüber den Vorteil, daß die Anschlußleitung durch direktes Umspritzen und Verbinden der Kunststofftülle mit den Leiterenden gegen das Eindringen von Feuchtigkeit auf dem Wege zwischen dem elektrischen Leiter und der Kunststofftülle, zwischen der Kunststofftülle und dem sie und die Leiterenden umschließenden Leitungsmantel sowie zwischen dem Leitungsmantel und dem ihn umschließenden Gehäuse geschützt in das Gehäuse eingeführt ist. Dadurch wird eine für Sensoren, welche an exponierter Stelle im Kraftfahrzeug vorgesehen sind — beispielsweise für Antiblockiersystem oder digitale Motorelektronik — ausreichend druck- und feuchtigkeitsdichte Einführung einer Anschlußleitung in deren Gehäuse erreicht ; d. h. an und in der Anschlußleitung kann keine Feuchtigkeit von außerhalb des Gehäuses in das Gehäuse und das darin angeordnete Gerät dringen. Als weiterer Vorteil ist die mit einfachen Mitteln zu erreichende mechanische Festigkeit der Anschlußleitung anzusehen.

Durch die in den Unteransprüchen aufgeführten Maßnahmen sind vorteilhafte Weiterbildungen der im Hauptanspruch angegebenen Einführung einer Anschlußleitung möglich. Besonders vorteilhaft ist, den elektrischen Leiter als Massivleiter oder wenigstens das an der Anschlußstelle des Gehäuses anzubringende Leiterende als Massivleiter auszubilden und auf die auf einem Leiterabschnitt fest haftende Isolierschicht eine Schicht eines schmelzenden Thermoplasten oder reaktionsfähigen Duroplasten aufzubringen, die sich mit dem Thermoplasten oder Duroplasten der Kunststofftülle beim Umspritzen der Tülle verbindet bzw. mit ihm reagiert. Die Kunststofftülle verbindet sich dabei ebenso mit dem Leitermantel, wenn eine Mantelleitung verwendet werden soll. Außerdem ist auch das Einsetzen der Leitung mit der umspritzten Kunststofftülle in eine Bohrung des Gehäuses möglich, in welcher Mittel zum Abdichten gegen Druck und Feuchtigkeit zwischen Gehäuse und Kunststofftülle vorgesehen sind.

Zeichnung

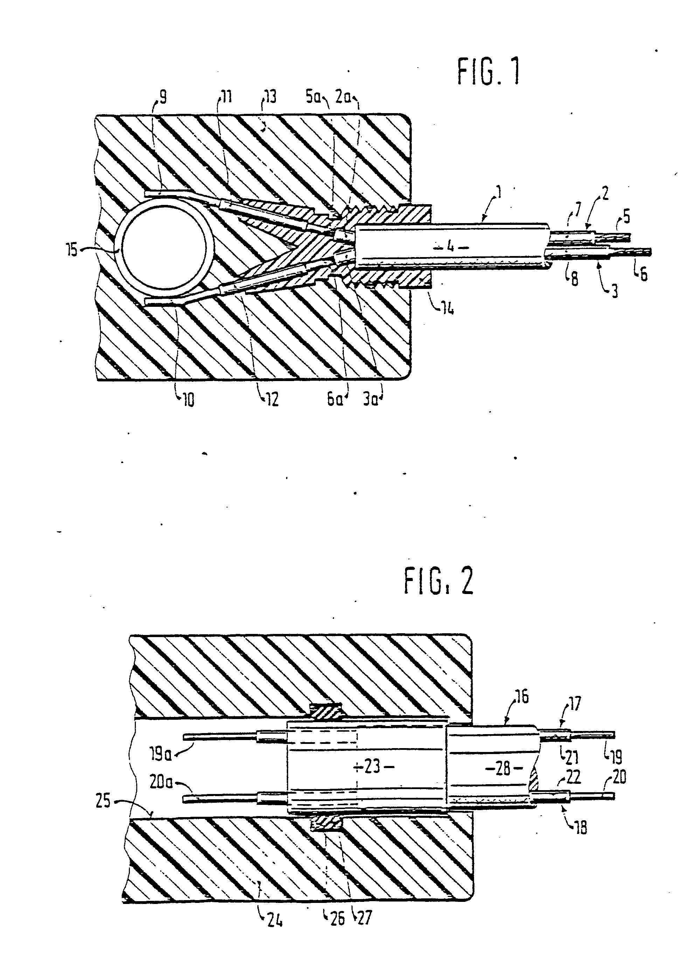

Ausführungsbeispiele der Erfindung sind in der Zeichnung dargestellt. Es zeigen Figur 1 ein erstes Ausführungsbeispiel der druck- und feuchtigkeitsdichten Einführung einer Anschlußleitung zu dem vereinfacht dargestellten angeschlossenen elektrischen Gerät und Figur 2 ein zweites Ausführungsbeispiel der druck- und feuchtigkeitsdichten Einführung einer Anschlußleitung mit einer Tülle, die in einer Gehäusebohrung angeordnet ist.

Beschreibung der Ausführungsbeispiele

In Figur 1 ist ein erstes Ausführungsbeispiel einer Einführung einer Anschlußleitung dargestellt, welche druck- und feuchtigkeitsdicht an ein als Sensor ausgebildetes elektrisches Gerät angeschlossen ist. Die Anschlußleitung 1 hat zwei Adern 2 und 3, die von einem äußeren Kunststoffmantel 4 umgeben sind. Die Adern 2 und 3 bestehen jeweils aus einem Litzenleiter 5 bzw. 6, der in einer zugehörigen Isolierhülle 7 bzw. 8 eingebettet ist. Die Litzenleiter 5 und 6 sind an einem Ende 5a ; 6a abisoliert, d. h. von der Isolierhülle 7 bzw. 8 befreit. An die abisolierten Litzenenden 5a und 6a schließt sich einerseits ein Abschnitt 2a bzw. 3a der Adern an, von dem der Kunststoffmantel 4 entfernt ist. An die Litzenenden 5a und 6a ist andererseits jeweils ein Massivleiter 9 bzw. 10 elektrisch leitend befestigt, z. B. angelötet oder angeschweißt.

Die Massivleiter 9, 10 sind auf einem Teil ihrer Länge mit einer fest haftenden Isolierschicht 11 bzw. 12 überzogen. Die fest haftende Isolierschicht 11, 12 besteht beispielsweise aus einem Lacküberzug. Die fest haftende Isolierschicht 11, 12 verhindert das Ausbreiten von Feuchtigkeit am Umfang des Massivleiters 9 bzw. 10. Die Enden 9 und 10 der Massivleiter dienen als Anschluß der Leitung 1 am elektrischen Gerät.

Um das Ende der Anschlußleitung 1 in ein Gehäuse 13 des elektrischen Geräts druck- und feuchtigkeitsdicht einzuführen, ist das Ende der Anschlußleitung 1 in einer Spritzgußform mit einer Tülle 14 aus einem thermoplastischen oder duroplastischen Isolierstoff umspritzt. Die Wahl des Isolierstoffes hängt unter anderem von der geforderten Höhe der Wärmebeständigkeit ab, die beispielsweise bei funktionskritischen Geräten in Kraftfahrzeugen wie Sensoren ebenso zu berücksichtigen ist wie das Abdichten gegen Drücke und Feuchtigkeit. Die Tülle 14 umschließt den Endabschnitt des Kunststoffmantels 4, die überstehenden Enden 2a und 3a der Adern 2 und 3 mit den abisolierten Litzenenden 5a und 6a sowie den an den Litzenenden 5a, 6a befestigten Teil der Massivleiter 9, 10 bis mindestens einschließlich eines Teils der fest auf ihnen haftenden Isolierschicht 11, 12. In den Verbindungsbereichen zwischen Massivleiter 9, 10 und Litzenenden 5a, 6a umschließt die Tülle 14 die einzelnen Leiter 5a, 9 bzw. 6a, 10 und verbindet sich oder reagiert mit der Isolierschicht 11, 12.

Die freien nicht isolierten Enden der Massivleiter 9, 10 sind in an sich bekannter Weise an einem nicht näher dargestellten Sensor 15 angeschlossen. Das Gehäuse 13 des Sensors 15 umhüllt den Anschlußbereich zwischen Anschlußleitung 1 und Sensor 15. Das Gehäuse 13 besteht ebenfalls aus einem thermoplastischen oder duroplastischen Isolierstoff. Er verbindet sich bzw. reagiert mit der Tülle 14 und dem nicht von der Tülle 14 umschlossenen Teil der fest haftenden Isolierschicht 11, 12 der Massivleiter 9, 10. Die Verwendung der Massivleiter 9, 10 mit der fest haftenden Isolierschicht 11, 12 als Anschlußenden der Litzenleiter 5, 6 stellt eine einfache druck- und feuchtigkeitsdichte Leitereinführung dar. Denn die fest haftend auf den Massivleitern 9, 10 aufgebrachte Isolierschicht 11, 12 ist auf einem Abschnitt mit der Tülle 14 und auf dem anschließenden Abschnitt mit dem Gehäuse 13 dicht verbunden ebenso wie Gehäuse und Tülle. Außerdem gewährleisten die Massivleiter 9, 10, daß die Anschlußenden der Anschlußleitung 1 ausreichend mechanisch stabil sind. Als Massivdrähte 9, 10 eignen sich beispielsweise weichgeglühte lackisolierte Wickeldrähte.

Eine besonders stabile Verbindung wird erreicht, wenn auf die fest haftende Isolierschicht 11, 12 noch zusätzlich eine schmelzende Schicht aus einem Thermoplast, zum Beispiel Polyamid, oder eine reaktionsfähige Schicht aus einem Duroplast, z. B. Polyesterimid oder Epoxid aufgebracht ist.

In Figur 2 ist ein zweites Ausführungsbeispiel der Einführung einer Anschlußleitung dargestellt, welche mit der sie umgebenden Tülle druck- und feuchtigkeitsdicht, jedoch lösbar in einer Bohrung des Gehäuses des elektrischen Geräts eingesetzt ist. Die Anschlußleitung 16 hat zwei Adern 17 und 18 aus je einem Massivleiter 19 bzw. 20, der mit einer fest haftenden Isolierschicht 21 bzw. 22 versehen ist. Auch bei diesem Ausführungsbeispiel kann auf der als Lacküberzug ausgebildeten, fest haftenden Isolierschicht 21, 22 eine zusätzliche Schicht aus einem schmelzenden Thermoplasten oder einem reaktionsfähigen Duroplasten aufgebracht sein. In eine zylindrische Tülle 23 sind die mit Abstand zueinander verlaufenden Adern 17, 18 eingebettet. Die Tülle 23 geht dabei eine druck- und feuchtigkeitsdichte Verbindung mit der Isolierschicht 21, 22 oder der auf ihr aufgebrachten zusätzlichen Kunststoffschicht ein. Im Gehäuse 24 des elektrischen Geräts, das wiederum ein Sensor beispielsweise für ein Antiblockiersystem oder eine digitale Motorelektronik sein kann, ist eine Bohrung 25 mit einer Ringnut 26 ausgebildet. In der Ringnut 26 ist ein Dichtring 27 angeordnet. Die Tülle 23 ist mit den Anschlußenden 19a bzw. 20a der Massivleiter 19 bzw. 20 in die Bohrung 25 eingesetzt und vom Dichtring 27 ebenfalls druck- und feuchtigkeitsdicht umgeben. Die sich durch die Bohrung 25 erstreckenden Anschlußenden 19a und 20a können in an sich bekannter und nicht näher dargestellter Weise mit einem nicht näher dargestellten elektrischen Gerät verbunden sein. Die aus dem Gehäuse 24 ragende Anschlußleitung 16 mit einem die Adern 17 und 18 umgebenden Kunststoffmantel 28 erhält ihre mechanische Festigkeit gegen Herausziehen durch die Verbindung von Tülle 23 und Leitungsmantel 28 während des Umspritzens der Tülle 23.

**Patentansprüche**

1. Druck- und feuchtigkeitsdichte Einführung der abisolierten Leiterenden (9, 10, 19a, 20a) einer elektrischen Anschlußleitung (1, 16) zur Anschlußstelle dieser Leiterenden im Gehäuse (13) aus Kunststoff eines elektrischen Gerätes, wobei die Anschlußleitung (1, 16) einen mit einer Kunststofftülle (14, 23) umspritzten Bereich aufweist, welcher mindestens mit einem Teil seiner Länge in den die Anschlußstelle umhüllenden Gerätegehäuse druck- und feuchtigkeitsdicht angeordnet ist, dadurch gekennzeichnet, daß ein Abschnitt jedes abisolierten Leiterendes (9, 10 ; 19a, 20a) mit einer fest auf ihm haftenden Isolierschicht (11, 12 ; 21, 22) versehen ist, daß sich die Kunststofftülle (14, 23) mindestens über eine Teillänge dieser Abschnitte erstreckt und daß für die Isolierschicht (11, 12 ; 21, 22) und die Kunststofftülle (14, 23) Werkstoffe verwendet sind, die beim Spritzen der Isoliertülle (14, 23) um die Anschlußleitung (1, 16) miteinander verschmelzen oder eine chemische Verbindung eingehen.

2. Einführung nach Anspruch 1, dadurch gekennzeichnet, daß die Abschnitte der abisolierten Leiterenden mit der fest auf ihnen haftenden Isolierschicht (11, 12 ; 21, 22) als Massivleiter (9, 10 ; 19, 20) ausgebildet sind.

3. Einführung nach Anspruch 1 oder 2, dadurch gekennzeichnet, daß jedes abisolierte Ende (5a ; 6a) eines Litzenleiters (5 ; 6) mit einem das Leiterende bildenden Massivleiter (9, 10) elektrisch leitend verbunden ist, welcher den Abschnitt mit der fest haftenden Isolierschicht (11 ; 12) aufweist.

4. Einführung nach einem der Ansprüche 1 bis 3, dadurch gekennzeichnet, daß die fest haftende Isolierschicht (11, 12 ; 21, 22) ein Isolierslack ist.

5. Einführung nach einem der Ansprüche 1 bis 4, dadurch gekennzeichnet, daß auf der fest haftenden Isolierschicht (11, 12 ; 21, 22) eine zusätzliche Schicht aus einem Thermoplast haftend aufgebracht ist.

6. Einführung nach einem der Ansprüche 1 bis 4, dadurch gekennzeichnet, daß auf der fest haftenden Isolierschicht (11, 12 ; 21, 22) eine zusätzliche, haftende und reaktionsfähige Schicht aus einem Duroplast aufgebracht ist.

7. Einführung nach einem der Ansprüche 1 bis 5, dadurch gekennzeichnet, daß die Kunststofftülle (14, 23) aus einem Thermoplast besteht.

8. Einführung nach einem der Ansprüche 1 bis 4 und 6, dadurch gekennzeichnet, daß die Kunststofftülle (14, 23) aus einem Duroplast besteht.

9. Einführung nach einem der Ansprüche 1 bis 8, dadurch gekennzeichnet, daß die Kunststofftülle (14) in das Gehäuse (13) feuchtigkeitsdicht eingebettet ist.

10. Einführung nach einem der Ansprüche 1 bis 8, dadurch gekennzeichnet, daß die Kunststofftülle (23) in eine Bohrung (25) des Gehäuses (24) eingesetzt ist, in der ein am Mantel der Kunststofftülle (23) anliegendes Dichtelement (27) angeordnet ist.

## Claims

1. Pressure- and moisture-tight lead-in for the stripped conductor ends (9, 10 ; 19a, 20a) of an electric lead (1, 16) to the terminal point of these conductor ends in the plastic housing (13) of an electric appliance, the lead (1, 16) having a zone which is surrounded by a moulded plastic bushing (14, 23) and which, at least over a part of its length, is arranged in a pressure- and moisture-tight manner in the appliance housing enclosing the terminal point, characterised in that one section of each stripped conductor end (9, 10 ; 19a, 20a) is provided with an insulating layer (11, 12 ; 21, 22) firmly adhering thereto, that the plastic bushing (14 ; 23) extends over at least a part length of these sections, and that, for the insulating layer (11, 12 ; 21, 22) and the plastic bushing (14 ; 23), materials have been used which fuse with one another or enter a chemical bond when the insulating bushing (14, 23) is moulded around the lead (1, 16).

2. Lead-in according to Claim 1, characterised in that the sections of the stripped conductor ends, with the insulating layer (11, 12 ; 21, 22) firmly adhering thereto, are formed as solid conductors (9, 10 ; 19, 20).

3. Lead-in according to Claim 1 or 2, characterised in that each stripped end (5a ; 6a) of a stranded-wire conductor (5 ; 6) is electrically conductively joined to a solid conductor (9 ; 10) which forms the conductor end and carries the section with the firmly adhering insulating layer (11 ; 12).

4. Lead-in according to Claims 1 to 3, characterised in that the firmly adhering insulating layer (11, 12 ; 21, 22) is an insulating lacquer.

5. Lead-in according to one of Claims 1 to 4, characterised in that an additional layer of a thermoplastic is adhesively applied to the firmly adhering insulating layer (11, 12 ; 21, 22).

6. Lead-in according to one of Claims 1 to 4, characterised in that an additional, adhering and reactive layer of a thermosetting resin is applied to the firmly adhering insulating layer (11, 12 ; 21, 22).

7. Lead-in according to Claims 1 to 5, characterised in that the plastic bushing (14 ; 23) consists of a thermoplastic.

8. Lead-in according to one of Claims 1 to 4 and 6, characterised in that the plastic bushing (14, 23) consists of a thermosetting resin.

9. Lead-in according to one of Claims 1 to 8, characterised in that the plastic bushing (14) is embedded in the housing (13) in a moisture-tight manner.

10. Lead-in according to one of Claims 1 to 8, characterised in that the plastic bushing (23) is inserted into a bore (25) in the housing (24), in which bore a sealing element (27) bearing against the shell of the plastic bushing (23) is arranged.

## Revendications

1. Introduction étanche à la pression et à l'humidité des bouts mis à nu des conducteurs (9, 10, 19a, 20a) d'un câble de raccordement (1, 16) vers un point de raccordement de ces bouts conducteurs dans le boîtier (13) en matière plastique d'un appareil électrique, où ce câble de raccordement (1, 16) présente une zone recouverte par injection d'une gaine (14, 23) en matière plastique, qui est disposée, par au moins une partie de sa longueur, d'une façon étanche à la pression et à l'humidité dans le boîtier de l'appareil entourant le point de raccordement, introduction caractérisée en ce qu'une section de chacun des bouts des conducteurs mis à nu (9, 10, 19a, 20a) est pourvue d'une couche isolante qui adhère fortement (11, 12 ; 21, 22), que la gaine en matière plastique (14, 23) s'étend sur une longueur partielle de cette section, et que l'on utilise pour la couche isolante (11, 12 ; 21, 22), et la gaine en matière plastique, des matières qui, au cours de l'injection de la gaine isolante (14, 23) autour d'un câble de raccordement (1, 16) se fondent ensemble ou forment une combinaison chimique.

2. Introduction suivant la revendication 1, caractérisée en ce que les sections des bouts des conducteurs dénudés avec la couche isolante (11, 12 ; 21, 22) qui y adhère fortement, sont réalisés sous la forme de conducteurs massifs (9, 10 ; 19, 20).

3. Introduction suivant l'une des revendications 1 et 2, caractérisée en ce que chaque extrémité dénudée (5a, 6a) d'un conducteur en torsade (5, 6) est reliée, conductrice de l'électricité, avec un conducteur massif (9, 10) formant le bout du conducteur et qui comporte la couche isolante (11, 12) à forte adhérence.

4. Introduction suivant l'une des revendications 1 à 3, caractérisée en ce que la couche isolante à forte adhérence (11, 12 ; 21, 22) est un vernis isolant.

5. Introduction suivant l'une des revendications 1 à 4, caractérisée en ce que, sur la couche isolante à forte adhérence (11, 12 ; 21, 22) on applique, de façon qu'elle adhère, une couche supplémentaire en une matière thermoplastique.

6. Introduction suivant l'une quelconque des revendications 1 à 4, caractérisée en ce que, sur la couche isolante à forte adhérence (11, 12 ; 21, 22), on applique une couche supplémentaire, adhérente et réactive, en matière thermodurcissable.

7. Introduction suivant l'une des revendications 1 à 5, caractérisée en ce que la gaine (14, 23) en matière plastique est constituée de matière thermoplastique.

8. Introduction suivant l'une des revendications 1 à 4 et 6, caractérisée en ce que la gaine (14, 23) en matière plastique est faite de matière thermodurcissable.

9. Introduction suivant l'une des revendications 1 à 8, caractérisée en ce que la gaine (14) en matière plastique est incorporée dans le boîtier (13) d'une façon étanche à l'humidité.

10. Introduction suivant l'une des revendications 1 à 8, caractérisée en ce que la gaine en matière plastique (23) est insérée dans une perforation (25) du boîtier (24), dans laquelle est disposé un élément d'étanchéité (27) qui s'applique sur l'enveloppe de la gaine (23) en matière plastique.

## FIG. 1

## FIG. 2